# EUROPÄISCHE PATENTSCHRIFT

(11) **EP 1 300 060 B1**
(45) Veröffentlichungstag und Bekanntmachung des Hinweises auf die Patenterteilung: **04.01.2006**
(21) Anmeldenummer: 02020913.6
(22) Anmeldetag: 19.09.2002
(51) Int. Cl.: A01B 21/08, A01B 49/02

(54) **Bodenbearbeitungsgerät**
Soil working tool
Outil pour le travail du sol

(30) Priorität: 02.10.2001 DE 10148814
(43) Veröffentlichungstag der Anmeldung: 09.04.2003
(73) Patentinhaber: Lemken GmbH & Co. KG, 46519 Alpen (DE)
(72) Erfinder: Achten, Georg, 47918 Tönisvorst (DE)
(74) Vertreter: Schulte, Jörg

(56) Entgegenhaltungen:
- WO-A-02/19792
- FR-A- 2 630 286
- US-A- 2 766 672
- US-A- 3 572 783
- US-A- 3 768 572

## Beschreibung

Die Erfindung bezieht sich auf ein Bodenbearbeitungsgerät mit einem Rahmen, bestehend aus mindestens zwei hintereinander und quer angeordneten und über Verbindungsträger miteinander verbundenen Rahmenteilen, an denen Hohscheibenreihen bildende und in Arbeitsrichtung zu einer Seite weisende Hohlscheiben mit separaten Lagerungen nebeneinander angeordnet sind, die über Tragarme mit den Rahmenteilen verbunden sind und dass die Hohlscheiben eines Rahmenteiles mit den Hohlflächen in Arbeitsrichtung schräg nach vorn und zur einen Seite und die Hohlscheiben des anderen Rahmenteiles in Arbeitsrichtung schräg nach vorn und zur anderen Seite weisend angeordnet sind und dass die Sehnen der Hohlflächen der Hohlscheiben mit der Bodenoberfläche einen stumpfen Winkel einschließend angeordnet sind.

Ein derartiges Bodenbearbeitungsgerät ist aus der amerikanischen Patentschrift US 1 557 109 bekannt. Bei dem Gegenstand dieser Anmeldung handelt es sich um ein gezogenes Bodenbearbeitungsgerät mit einem Rahmen mit zwei Rahmenteilen, an denen Hohlscheiben mit separaten Lagerungen nebeneinander angeordnet sind. Die Hohlscheiben sind im Angriffswinkel einstellbar und auch seitlich verschiebbar an den Rahmenteilen befestigt. Die Hohlscheiben, die am ersten Rahmenteil befestigt sind, weisen mit ihren Hohlflächen in Fahrtrichtung gesehen nach links und die Hohlflächen der dahinter liegenden Reihe weisen mit ihren Hohlflächen nach rechts. Die Hohlscheiben der ersten Hohlscheibenreihe schälen während der Arbeit jeweils einen Bodenstreifen ab und legen diesen seitlich ab. Die Hohlscheiben der nachfolgenden Hohlscheibenreihe schälen ebenfalls jeweils einen Bodenstreifen ab und legen diesen zusammen mit dem Bodenstreifen der ersten Hohlscheibenreihe ab. Dies hat den Nachteil, dass sich Haufen bilden, die unkontrolliert abgelegt werden und auch zu Verstopfungen führen. Dadurch ist eine genaue Einhaltung der Arbeitsbreite und ein verstopfungsfreies Arbeiten nicht möglich. Der Einsatz in Kombination mit einer Sämaschine ist daher so nicht möglich. Zusätzlich hinterlässt das Gerät einen schlecht bearbeiteten Acker, der zusätzliche Arbeitsgänge erfordert. Bei dem Gerät nach der US-A-3 572 783 handelt es sich um eine Scheibenegge, bei der jeweils alle Hohischeiben auf einer Achse angeordnet sind. Die nachgeordneten Striegel können nicht als Niederhalter wirken, sondern glätten nur den abgelegten Boden. Ein Prospekt der Firma AGRISEM International S.A. aus 2001 (Beaucé, F. 44850 Ligné) zeigt ein Gerät das auch Gegenstand der WO 02 19792 A ist und bei dem hinter den Hohlscheiben eine Prallwand angeordnet ist, die Särohre schützt, die den Erdfluß beeinflußt und das Ablegen des Erdreiches begünstigt, aber leicht zu Verstopfungen führt. Die FR-A-2 630 286 zeigt eine Kurzscheibenegge ohne Niederhalter und bei der US-A-2 766 672 ist eine Grubber wiedergegeben, der den Zinken vorgeordnete und den Schneidbereich begrenzende Scheibenpaare besitzt. Die Zinken sind nicht als Niederhalter ausgebildet und können auch nicht entsprechend arbeiten. Auch bei dem Zinkenrotor der US-A-3 768 572 kann die durchgehende, dort vom Gesetzgeber geforderte Prallfläche nicht mit einem Niederhalter bei Scheibeneggen verglichen werden. Diese Abdeckhaube dient als Schutz der Umgebung, nicht aber als Bodenbearbeitungsteil, das den Boden für eine Sämaschine vorbereiten soll.

Aufgabe der Erfindung ist es, ein entsprechendes Bodenbearbeitungsgerät zu schaffen, das einfach aufgebaut ist, das das vom Boden abgetrennte Erdreich kontrolliert ablegt, das verstopfungsunanfällig und auch in Kombination mit einer Sämaschine problemlos einsetzbar ist.

Die Aufgabe wird gelöst, indem Niederhalter jeweils direkt hinter den von den Hohlscheiben gebildeten, hintereinander angeordneten Hohlscheibenreihen angeordnet sowie elastisch nachgebend ausgebildet sind. Diese Niederhalter sind so angeordnet und ausgebildet, dass das von den Scheiben mitgeführte und aufgeworfene Erdreich aufgefangen und gezielt abgelegt wird, und zwar vorzugsweise direkt hinter der Hohlscheibe, die das Erdreich abgeschält hat. Die elastische Ausbildung sorgt dafür, dass Erdreich nicht am Niederhalter haften bleiben kann und zusätzlich Verstopfer vermieden werden.

Die Erfindung sieht weiter vor, dass die Niederhalter als elastische Zinken ausgebildet sind, die in Arbeitsrichtung so angeordnet sind, dass sie mit dem Boden einen spitzen Winkel einschließen. Durch die elastischen Zinken wird der Boden zusätzlich gekrümelt. Die elastischen Zinken sind begrenzt beweglich zueinander, so dass ein Ankleben von Boden erschwert ist. Die spitze Winkelstellung sorgt dafür, dass das von den Hohlscheiben ausgeworfene Erdreich niedergehalten wird.

Die Erfindung sieht weiter vor, dass die elastischen Zinken, vorzugsweise als aus Stahl, Kunststoff oder Gummi bestehende Striegelzinken ausgebildet sind. Insbesondere die Ausführung aus Kunststoff reduziert zusätzlich die Klebegefahr.

Weiter ist erfindungsgemäß vorgesehen, dass die Striegelzinken abgewinkelt oder gebogen ausgebildet sind. Durch diese Maßnahme wird der Erdfluss noch gezielter beeinflusst werden, was insgesamt der Arbeitsqualität des gesamten Gerätes zugute kommt.

Die Erfindung sieht weiter vor, dass die hinter den Hohlscheiben angeordneten Striegelzinken einem Zwischenrahmen zugeordnet sind, der wiederum mit dem Rahmen mittelbar oder unmittelbar verbunden ist und der mit den Striegelzinken in der Höhe, seitlich, im Abstand und auch im Winkel zum Rahmen und damit zu den Hohlscheiben einstellbar ausgebildet ist. Durch diese Maßnahme ist es möglich, die Striegel über den Zwischenrahmen so einzustellen, dass sie für die jeweils vorliegenden Bodenverhältnisse optimal eingestellt sind.

Weiter sieht die Erfindung vor, dass der Rahmen mit den Striegelzinken Mittel für die Tiefenführung aufweist, vorzugsweise eine Nachlaufwalze oder Packerwalze, die mit ihrem Walzenrahmen über Träger mit dem Rahmen verbunden ist. Über die nachgeordnete Nachlaufwalze oder Packerwalze wird das mit den Striegelzinken optimierte Gerät zum einen sicher in der Arbeitstiefe tiefeneinstellbar geführt und zum anderen wird der Boden zusätzlich gekrürnelt und rückverfestigt.

Eine vereinfachte Einstellung der Arbeitsstufe ist möglich, wenn erfindungsgemäß mindestens die Niederhalter bzw. Striegelzinken, die den hinteren Hohlscheiben zugeordnet sind, am Walzenrahmen oder an den Trägern der Nachlaufwalze befestigt sind. So brauchen bei einer Änderung der Arbeitstiefe die betroffenen Niederhalter selbst in ihrer Einstellung nicht korrigiert zu werden.

Das Bodenbearbeitungsgerät folgt Bodenunebenheiten problemlos, wenn den die Hohlscheiben tragenden und mit den Rahmenteilen verbundenen Tragarmen Federelemente zugeordnet sind, die eine individuelle Bodenanpassung der den Striegelzinken vorgeordneten Hohlscheiben zulassend ausgebildet sind. Diese Ausführung ermöglicht es somit, dass die einzelnen Hohlscheiben der Bodenkontur folgen können. Auch welliges und unebenes Gelände kann dadurch extrem flach bearbeitet werden.

Zur Verringerung von Schäden ist vorgesehen, dass die Tragarme Überlastsicherungen aufweisen, die bei Überlastung ein Ausweichen der Hohlscheiben nach hinten und oben gewährleisten. Diese Überlastsicherung verhindert insbesondere in steinigen Bodenverhältnissen, dass ernsthafte Schäden am Gerät und an den Hohlscheiben auftreten.

Weitere Einzelheiten und Vorteile des Erfindungsgegenstandes ergeben sich aus der nachfolgenden Beschreibung und den zugehörigen Zeichnungen, in denen die notwendigen Einzelheiten dargestellt sind. Es zeigen:
- Figur 1: eine perspektivische Darstellung des Bodenbearbeitungsgerätes,
- Figur 2: eine Draufsicht auf das Bodenbearbeitungsgerät,
- Figur 3: eine Seitenansicht des Bodenbearbeitungsgerätes und
- Figur 4: eine Detailansicht einer Hohlscheibe.

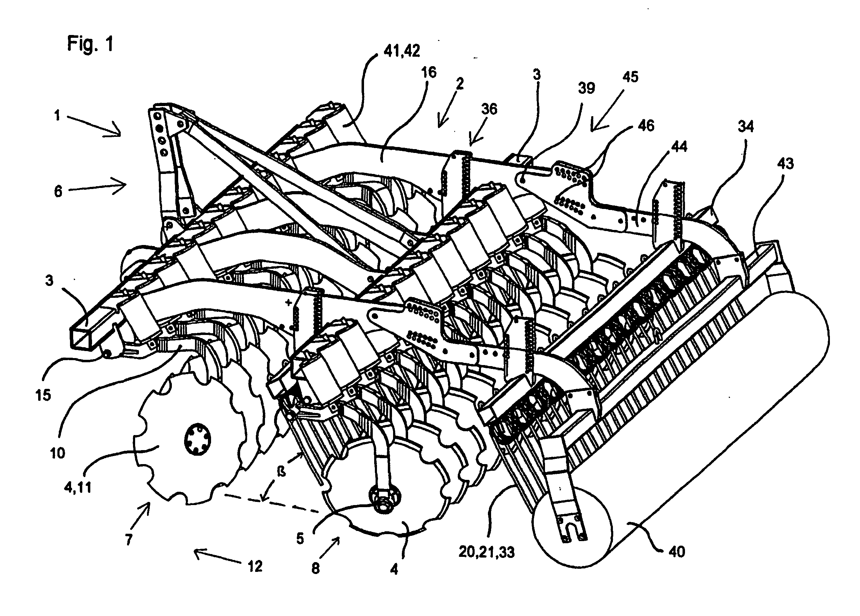

Figur 1 zeigt das Bodenbearbeitungsgerät (1) mit seinem Rahmen (2) und den Rahmenteilen (3, 3'), die über die Verbindungsträger (16) miteinander verbunden sind. An den Rahmenteilen (3, 3') sind die Hohlscheiben (4, 4') über deren Lagerungen (5), den Tragarmen (10) und den Quergelenken (15) schwenkbar verbunden. Über Federelemente (41) werden die jeweiligen Hohlscheiben (4) in Arbeitsstellung gehalten, und zwar elastisch nachgebbar. Je nach Ausbildung und Kennlinie des Federelementes (41) wird die jeweilige Hohlscheibe (4) schwimmend oder vorgespannt geführt.

Am vorderen Rahmenteil (3) sind die Hohlscheiben (4) angeordnet, die zur vorderen Hohlscheibenreihe (7) gehören. Am hinteren Rahmenteil sind die Hohlscheiben (4') angeordnet, die zur hinteren Hohlscheibenreihe (8) gehören.

Die Hohlscheiben (4) der vorderen Hohlscheibenreihe (7) weisen mit ihren Hohlflächen (11) in Arbeitsrichtung (12) gesehen nach links und die Hohlscheiben (4) der hinteren Hohlscheibenreihe (8) weisen mit ihren Hohlflächen (11) in Arbeitsrichtung (12) gesehen nach rechts.

Hinter den Hohlscheiben (4') sind Niederhalter (20) mit elastischen Zinken (21) vorgesehen, die in Arbeitsrichtung (12) mit der Bodenoberfläche (13) einen spitzen Winkel β (32) einschließen. Die elastischen Zinken (21) sind als Striegelzinken (33) ausgebildet, die an den Zwischenrahmen (34) befestigt sind. Der Zwischenrahmen (34), der hinter der ersten Hohlscheibenreihe (7) angeordnet ist, ist über die Verbindungsträger (16) mit dem Rahmen (2) des Bodenbearbeitungsgerätes (1) verbunden. Über eine Stellvorrichtung (35) mit Stiftverstellung (36) kann der Zwischenrahmen (34) mit den Striegelzinken (33) in Relation zu den Hohlscheiben (4) in der Höhe, im Abstand und im Winkel eingestellt werden.

Der Zwischenrahmen (34), der hinter der hinteren Hohlscheibenreihe (8) angeordnet ist, ist mit den Trägern (44) der Nachlaufwalze (40) verbunden. Auch hier können die Striegelzinken (33) über den Zwischenrahmen (34) in der Höhe, im Abstand und im Winkel zu den Hohlscheiben (4') der hinteren Hohischeibenreihe (8) eingestellt werden.

Über die Tiefeneinstellvorrichtung (45) mit Steckstiften (46) kann das Bodenbearbeitungsgerät (1) insgesamt in der Arbeitstiefe eingestellt werden. Es stützt sich dabei während der Arbeit über die Träger (44) und dem Walzenrahmen (43) auf die Nachlaufwalze (40) ab. Die Nachlaufwalze ist mit ihrem Walzenrahmen (43) und den Trägern (44) um die Querachse (39) schwenkbar mit den Verbindungsträgern (16) verbunden und wie zuvor erwähnt über die Tiefeneinstellvorrichtung (45) in ihrer Schwenkbarkeit einstellbar begrenzt.

Die Striegelzinken (33) sind hier als gerade gefederte Striegelzinken dargestellt. Zur besseren Bodenführung können sie auch abgewinkelt oder gebogen ausgebildet sein.

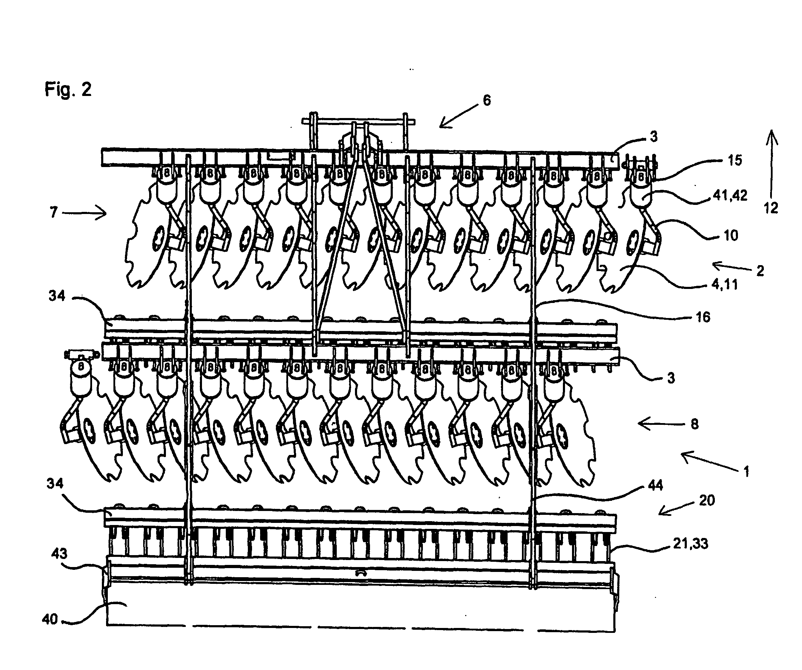

Die Figur 2 zeigt eine Draufsicht auf das Bodenbearbeitungsgerät (1). Sie verdeutlicht den einfachen Aufbau des Gerätes mit seinem Dreipunktturm (6) und seinem Rahmen (2) mit den Rahmenteilen (3), die über Verbindungsträger (16) miteinander verbunden sind. An den Rahmenteilen (3) sind die jeweiligen Hohlscheiben (4) über ihre Tragarme (10) und die Quergelenke (15) schwenkbar verbunden. Sie werden hier über die Federelemente (41) in Arbeitsstellung gehalten. Sowohl der vorderen Hohlscheibenreihe (7) als auch der hinteren Hohlscheibenreihe (8) sind Niederhalter (20) zugeordnet, die hier als einfache Striegelzinken (33) ausgebildet sind. Hinten am Bodenbearbeitungsgerät (1) ist eine Nachlaufwalze (40) bzw. Packerwalze (47) angeordnet, über die die Hohlscheiben (4) in ihrer Arbeitstiefe geführt werden. Die Nachlaufwalze (40) ist mittelbar über den Walzenrahmen (43) und die Träger (44) mit dem Rahmen (2) bzw. den Verbindungsträgern (16) verbunden.

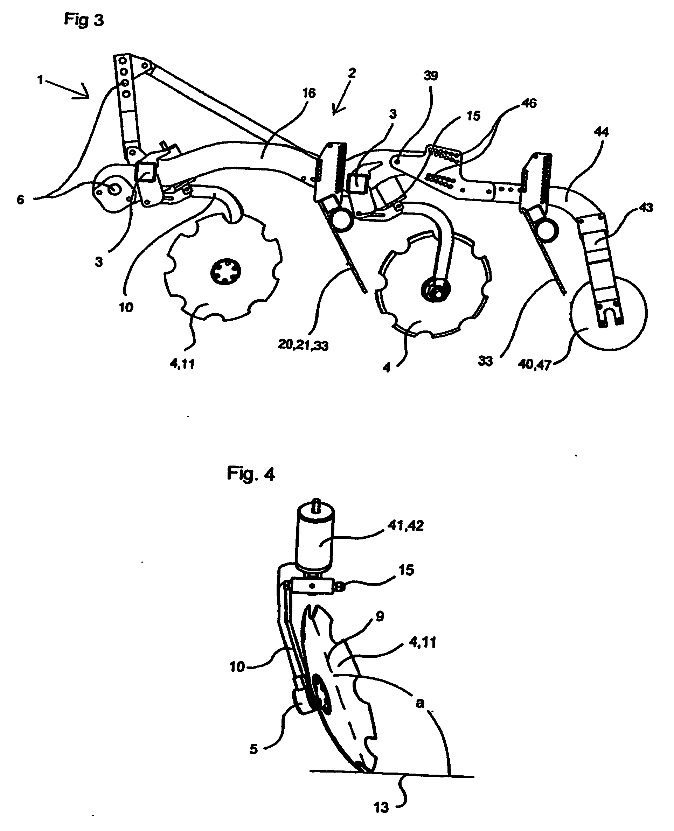

Die Figur 3 verdeutlicht, wie die Niederhalter (20) in Relation zu den Hohlscheiben (4) angeordnet sind. In dem dargestellten Beispiel sind die Niederhalter (20) in der hintersten Position montiert. Sie können nach vorn umgesetzt werden. Die Hohlscheiben (4) werden über die Nachlaufwalze (40) in der Tiefe geführt. Eine Tiefenänderung erfolgt über Steckstifte (46).

Die Figur 4 zeigt eine Detailansicht einer Hohlscheibe (4). Sie verdeutlicht insbesondere die Position der Hohlscheibe (4) in Relation zur Bodenoberfläche (13). Die Sehne (9) der Hohlscheibenfläche (11) schließt mit der Bodenoberfläche (13) einen stumpfen Winkel α (14) ein.

Mit (42) ist eine Überlastsicherung bezeichnet, die bei auftretender Überlast z. B. durch Steine ein Ausweichen der Hohlscheiben ermöglicht.

## Patentansprüche

1. Bodenbearbeitungsgerät (1) mit einem Rahmen (2), bestehend aus mindestens zwei, hintereinander und quer angeordneten über Verbindungsträger (16) miteinander verbundenen Rahmenteilen (3), an denen Hohlscheibenreihen bildende und in Arbeitsrichtung (12) zu einer Seite weisende Hohlscheiben (4) mit separaten Lagerungen (5) nebeneinander angeordnet sind, die über Tragarme (10) mit den Rahmenteilen (3) verbunden sind, wobei die Hohlscheiben (4) eines Rahmenteiles (3) mit den Hohlflächen (11) in Arbeitsrichtung (12) schräg nach vorn und zur einen Seite und die Hohlscheiben (4') des anderen Rahmenteiles (3') in Arbeitsrichtung (12) schräg nach vorn und zur anderen Seite weisend angeordnet sind und wobei die Sehnen (9) der Hohlflächen (11) der Hohischeiben (4,4') mit der Bodenoberfläche (13) einen stumpfen Winkel (α) einschließend angeordnet sind und wobei den Hohlscheibenreihen jeweils Niederhalter (20) nachgeordnet sind,
**dadurch gekennzeichnet,**
**dass** die Niederhalter (20) jeweils direkt hinter den von den Hohischeiben (4, 4') gebildeten, hintereinander angeordneten Hohlscheibenreihen angeordnet sowie elastisch nachgebend ausgebildet sind.

2. Bodenbearbeitungsgerät nach Anspruch 1,
**dadurch gekennzeichnet,**
**dass** die Niederhalter (20) als elastische Zinken (21) ausgebildet sind, die in Arbeitsrichtung (12) so angeordnet sind, dass sie mit der Bodenoberfläche (13) einen spitzen Winkel (β) einschließen.

3. Bodenbearbeitungsgerät nach einem der vorhergehenden Ansprüche,
**dadurch gekennzeichnet,**
**dass** die elastischen Zinken (21) als aus Stahl, Kunststoff oder Gummi bestehende Striegelzinken (33) ausgebildet sind.

4. Bodenbearbeitungsgerät nach einem der vorhergehenden Ansprüche,
**dadurch gekennzeichnet,**
**dass** die Striegelzinken (33) abgewinkelt oder gebogen ausgebildet sind.

5. Bodenbearbeitungsgerät nach einem der vorhergehenden Ansprüche,
**dadurch gekennzeichnet,**
**dass** die hinter den Hohlscheiben (4) angeordneten Striegelzinken (33) einem Zwischenrahmen (34) zugeordnet sind, der wiederum mit dem Rahmen (2) mittelbar oder unmittelbar verbunden ist und der mit den Striegelzinken (33) in der Höhe, seitlich, im Abstand und auch im Winkel zum Rahmen (2) und damit zu den Hohischeiben (4) einstellbar ausgebildet ist.

6. Bodenbearbeitungsgerät nach einem der vorhergehenden Ansprüche,
**dadurch gekennzeichnet,**
**dass** der Rahmen (2) mit den Striegelzinken (33) Mittel für die Tiefenführung (40, 47) aufweist, vorzugsweise Nachlaufwalzen (40) oder Packerwalzen (47), die mit ihrem Walzenrahmen (43) über Träger (44) mit dem Rahmen (2) verbunden sind.

7. Bodenbearbeitungsgerät nach einem der vorhergehenden Ansprüche,
**dadurch gekennzeichnet,**
**dass** mindestens die Niederhalter (20) bzw. Striegelzinken (33) die der hinteren Hohlscheibenreihe (8) zugeordnet sind, am Walzenrahmen (43) oder an den Trägern (44) der Nachlaufwalze (40) befestigt sind.

8. Bodenbearbeitungsgerät nach einem der vorhergehenden Ansprüche,
**dadurch gekennzeichnet,**
**dass** den die Hohlscheiben (4) tragenden und mit den Rahmenteilen (3) verbundenen Tragarmen (10) Federelemente (41) zugeordnet sind, die eine individuelle Bodenanpassung der den Striegelzinken (33) vorgeordneten Hohlscheiben (4) zulassend ausgebildet sind.

9. Bodenbearbeitungsgerät nach einem der vorhergehenden Ansprüche,
**dadurch gekennzeichnet,**
**dass** die Tragarme (10) Überlastsicherungen (42) aufweisen, die bei Überlastung ein Ausweichen der Hohlscheiben (4) nach hinten und oben gewährleisten.

## Revendications

1. Appareil de traitement de sol (1) avec un bâti (2) se composant d'au moins deux pièces de bâti (3) reliées l'une avec l'autre par l'intermédiaire de supports d'assemblage (16) disposés l'un derrière l'autre et transversalement, pièces de bâti sur lesquelles sont disposés l'un à côté de l'autre des disques concaves (4) formant des rangées de disques concaves et orientés vers un côté dans le sens de travail (12) avec des logements (5) séparés qui sont reliés par l'intermédiaire de bras porteurs (10) avec les pièces de bâti (3), étant donné que les disques concaves (4) d'une pièce de bâti (3) sont disposés avec les surfaces concaves (11) étant orientées obliquement vers l'avant et vers l'un des côtés dans le sens de travail (12) et les disques concaves (4') de l'autre pièce de bâti (3') étant orientés vers l'avant et vers l'autre côté dans le sens de travail (12), et étant donné que les cordes (9) des surfaces concaves (11) des disques concaves (4, 4') sont disposées de manière à former avec la surface du sol (13) un angle obtus (α), et étant donné que des abaisseurs (20) sont disposés en aval de chaque rangée de disques concaves,
**caractérisé en ce que**
les abaisseurs (20) sont disposés chacun directement derrière les rangées de disques concaves disposées l'une derrière l'autre et formées par les disques concaves (4, 4') et, en outre, sont conçues de manière à être élastiques et prêtants.

2. Appareil de traitement de sol selon la revendication 1,
**caractérisé en ce que**
les abaisseurs (20) sont conçus comme dents élastiques (21) qui sont disposées dans le sens de travail (12) de manière à former avec la surface du sol (13) un angle aigu (β).

3. Appareil de traitement de sol selon l'une quelconque des revendications précédentes,
**caractérisé en ce que**
les dents élastiques (21) sont conçues comme dents souples (33) en acier, matière plastique ou caoutchouc.

4. Appareil de traitement de sol selon l'une quelconque des revendications précédentes,
**caractérisé en ce que**
les dents souples (33) sont coudées ou courbées.

5. Appareil de traitement de sol selon l'une quelconque des revendications précédentes,
**caractérisé en ce que**
les dents souples (33) disposées derrière les disques concaves (4) sont affectées à un bâti intermédiaire (34) qui, pour sa part, est relié indirectement ou directement à un bâti (2) et qui est conçu de manière à être réglable avec les dents souples (33) en hauteur, latéralement, en écartement ainsi qu'en ce qui concerne l'angle par rapport au bâti (2) et, ainsi, aux disques concaves (4).

6. Appareil de traitement de sol selon l'une quelconque des revendications précédentes,
**caractérisé en ce que**
le bâti (2) avec les dents souples (33) présente des moyens de guidage en profondeur (40, 47), de préférence des rouleaux traînés (40) ou des rouleaux packer (47) dont les cadres de rouleaux (43) sont reliés par l'intermédiaire de supports (44) avec le bâti (2).

7. Appareil de traitement de sol selon l'une quelconque des revendications précédentes,
**caractérisé en ce que**
au moins les abaisseurs (20) et dents souples (33) qui sont affectés à la rangée de disques concaves arrière (8) sont fixés sur le cadre de rouleau (43) ou sur les supports (44) du rouleau traîné (40).

8. Appareil de traitement de sol selon l'une quelconque des revendications précédentes,
**caractérisé en ce que**
sont affectés aux bras porteurs (10) portant les disques concaves (4) et reliés aux pièces de bâti (3) des éléments résilients (41) qui sont conçus de manière à permettre une adaptation au sol individuelle des disques concaves (4) disposés en amont des dents souples (33).

9. Appareil de traitement de sol selon l'une quelconque des revendications précédentes,
**caractérisé en ce que**
les bras porteurs (10) présentent des limiteurs de charge (42) qui garantissent en cas de surcharge que les disques concaves (4) puissent s'esquiver vers l'arrière et le haut.

## Claims

1. Soil cultivation device (1) with a frame (2), consisting of at least two frame members (3) arranged behind each other and transversely, connected to each other by connecting supports (16), on which concave disks (4) having separate bearings (5) and facing towards one side in the working direction (12) are arranged adjoining each another to form rows of concave disks, said concave disks being linked via support arms (10) to the frame members (3), whereby the concave disks (4) of one frame member (3) are arranged with their concave surfaces (11) facing obliquely forwardly and to one side in the working direction (12) and the concave disks (4') of the other frame member (3') are arranged facing obliquely forwardly and to the other side in the working direction (12), and whereby the chords (9) of the concave surfaces (11) of the concave disks (4, 4') are arranged forming an obtuse angle (α) to the ground surface (13) and whereby hold-downs (20) are arranged following each of the concave disk rows,
**characterized in that**
the hold-downs (20) are each arranged directly behind the concave disk rows formed by the concave disks (4, 4') and are designed to be elastically flexible.

2. Soil cultivation device according to claim 1,
**characterized in that**
the hold-downs (20) are designed as elastic tines (21), which are arranged in the working direction (12) such that they form an acute angle (β) with the ground surface (13).

3. Soil cultivation device according to any one of the preceding claims,
**characterized in that**
the elastic tines (21) are designed as comb tines (33) made of steel, plastics or rubber.

4. Soil cultivation device according to any one of the preceding claims,
**characterized in that**
the comb tines (33) are designed angled or curved.

5. Soil cultivation device according to any one of the preceding claims,
**characterized in that**
the comb tines (33) arranged behind the concave disks (4) are assigned to an intermediate frame (34), which in turn is directly or indirectly linked to the frame (2) and which is designed to be adjustable with the comb tines (33) as to height, laterally, and as to distance from, and angle relative to the frame (2) and thus to the concave disks (4).

6. Soil cultivation device according to any one of the preceding claims,
**characterized in that**
the frame (2) with the comb tines (33) has means for depth guidance (40, 47), preferably following rollers (40) or compression rollers (47), which are linked with their roller frame (43) to the frame (2) via supports (44).

7. Soil cultivation device according to any one of the preceding claims,
**characterized in that**
at least the hold-downs (20) or the comb tines (33) which are assigned to the rear concave disk row (8) are attached to the roller frame (43) or to the supports (44) of the following roller (40).

8. Soil cultivation device according to any one of the preceding claims,
**characterized in that**
spring elements (41) which are designed to permit individual adaptation of the concave disks (4) arranged before the comb tines (33) to the ground are assigned to the support arms (10) carrying the concave disks (4) and linked to the frame members (3).

9. Soil cultivation device according to any one of the preceding claims,
**characterized in that**
the support arms (10) have overload protection devices (42), which ensure deflection of the concave disks (4) rearwardly and upwardly in the event of overload.
